# EUROPEAN PATENT SPECIFICATION

(11) **EP 2 586 353 B1**
(45) Date of publication and mention of the grant of the patent: **27.04.2016**
(21) Application number: 11797831.2
(22) Date of filing: 21.06.2011
(51) Int. Cl.: A47L 15/42, A47L 15/46, A47L 15/00

(54) **DISHWASHER**
GESCHIRRSPÜLER
LAVE-VAISSELLE

(30) Priority: 25.06.2010 JP 2010144632
(43) Date of publication of application: 01.05.2013
(73) Proprietor: Panasonic Corporation, Kadoma-shi Osaka 571-8501 (JP)
(72) Inventor: HIGASA, Kimihiko c/o Panasonic Corporation Intellectual Property Center IP Development Group, Osaka 540-6207 (JP); MIYAUCHI, Takashi c/o Panasonic Corporation Intellectual Property Center IP Development Group, Osaka 540-6207 (JP); MORITA, Keisuke c/o Panasonic Corporation Intellectual Property Center IP Development Group, Osaka 540-6207 (JP)
(74) Representative: Schwabe - Sandmair - Marx
(86) International application number: PCT/JP2011/003518
(87) International publication number: WO 2011/161942

(56) References cited:
- DE-A1-102007 059 517
- FR-A1- 2 574 645
- JP-A- 5 020 103
- JP-A- 5 115 417
- JP-A- 5 115 418
- JP-A- 2005 052 216
- US-B1- 6 622 754

## Description

### TECHNICAL FIELD

The present invention relates to a dishwasher for detecting a change in temperature of wash water so as to detect the volume of a dish, thus washing the dish.

### BACKGROUND ART

In recent years, there has been proposed a dishwasher for determining the volume such as the number or weight of dishes contained in the dishwasher so as to finely control an operating time, thus washing the dishes (refer to PTL 1, for example).

Hereinafter, a configuration of a conventional dishwasher disclosed in PTL 1 will be described with reference to FIGS. 6 and 7.

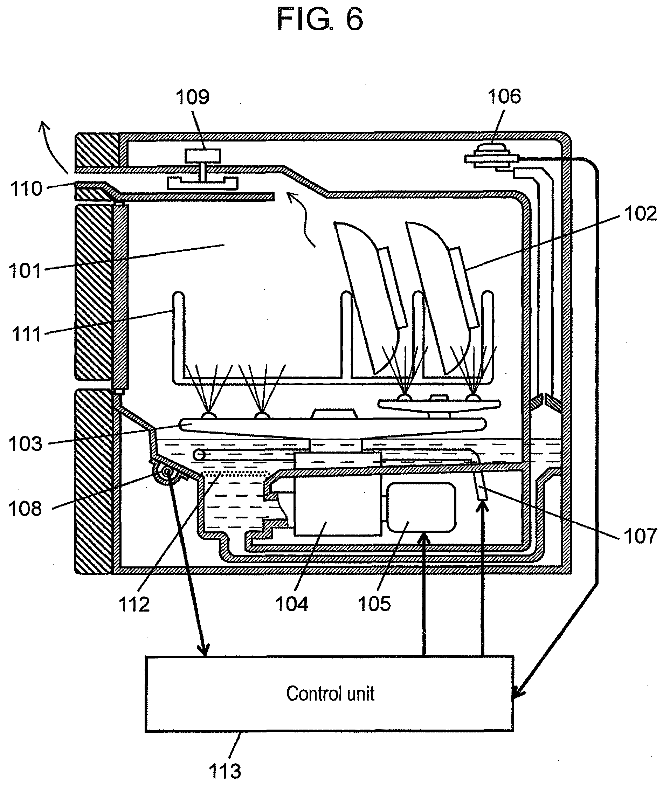

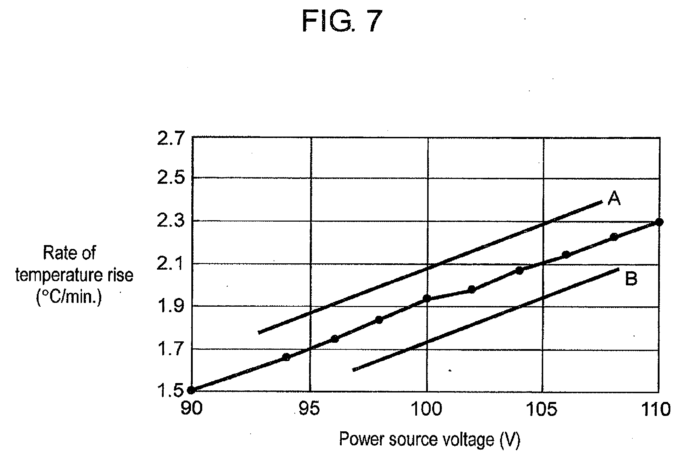

FIG. 6 is a view illustrating a configuration of a system of the conventional dishwasher; and FIG. 7 is a graph illustrating a relationship between a power source voltage and a rate of temperature rise in the conventional dishwasher.

As shown in FIG. 6, the conventional dishwasher is provided with washing tub 101, washing nozzle 103, washing pump 104, water level sensor 106 serving as a water level detecting unit, heater 107 serving as a heating unit, thermistor 108 serving as a temperature detecting unit, and control unit 113. Dish 102 is contained in washing tub 101. Wash water is reserved in washing tub 101. Washing nozzle 103 is rotatably supported inside of washing tub 101 and sprays the wash water toward dish 102. Washing pump 104 is driven by motor 105, to then feed the wash water to washing nozzle 103. Water level sensor 106 is adapted to detect a water level inside of washing tub 101, so as to output a detection signal to control unit 113. Heater 107 is disposed at the bottom inside of the washing tub 101, for heating the wash water. Thermistor 108 is fixed outside of the bottom of washing tub 101 in tight contact, for indirectly detecting the temperature of the wash water. Fan 109 feeds and exhausts steam from the inside of washing tub 101 to the outside of the dishwasher through exhaust port 110. Inside washing tub 101 is contained dish basket 111, in which dish 102 is put. At the bottom of washing tub 101 is disposed residue filter 112 for preventing foreign matters such as residues from clogging washing pump 104 during circulation of the wash water. Control unit 113 is designed to control a series of successive operations of washing, rinsing, heating/rinsing, and drying dish 102.

In the dishwasher having the above-described configuration, thermistor 108 measures the temperature of the wash water heated by heater 107 in the washing step after the start of the operation or the heating/rinsing step. And then, control unit 113 calculates the rate of temperature rise of the measured wash water so as to detect the volume of dish 102. An operation time of each of the rinsing and drying steps is varied based on the detected volume of dish 102 according to the degree of the rate of temperature rise. In other words, if the volume of dish 102 is small when the value of the product of a current and a voltage to be input into heater 107 is constant, the total thermal capacity of dish 102 is small, and therefore, the amount of heat of the wash water dissipated by dish 102 is small, resulting in an increase in the rate of temperature rise of the wash water (see line A in FIG. 7). To the contrary, if the volume of dish 102 is large, the total thermal capacity of dish 102 is large, and therefore, the amount of heat of the wash water dissipated by dish 102 is large, resulting in a decrease in the rate of temperature rise of the wash water (see line B in FIG. 7). As indicated by line A in FIG. 7, the temperature of the wash water at the small volume of dish 102 rises up more rapidly by the volume of dish 102 than the case indicated by line B at the large volume of dish 102.

In the same manner in the drying step, the operation time is shortened at the small volume of dish 102, so that constant washing and drying performances can be achieved according to the volume of dish 102, and further, a dishwasher excellent in energy saving performance can be implemented.

However, variations of wattage (the amount of electricity) of heater 107, fluctuations of a power source voltage, or the like cause an error of an increase in temperature of the wash water in the conventional dishwasher (see FIG. 7). That is, although the operation can be finely controlled according to the volume of the dish, it is difficult to perform an operation optimum for the variations of wattage of heater 107 or the fluctuations of the power source voltage in installation environment in every dishwasher. In view of this, it is conceived that a power source voltage detecting circuit is provided for enhancing the determination accuracy of the volume of dish 102, so that a power source voltage is corrected to stabilize the wattage of heater 107. However, the addition of a power source voltage detecting circuit complicates the configuration, and further, increases the size of a dishwasher body.

US-6,622,754 B1 describes a method of determining a dish load for an automatic dishwasher and a method of operating the automatic dishwasher based on the dish load. The dish load is determined by determining a first temperature corresponding to the temperature of the dishes, determining a second temperature corresponding to the temperature of a charge of water prior to a time when the charge of water contacts and transfers heat to the dishes, determining a third temperature corresponding to the temperature of the second charge of water when the temperature of the second charge of water and dishes have equalized, and calculating a temperature ratio of the difference between the second and third temperatures and the difference between the third and first temperatures.

DE 10 2007 059517 A1 describes a method for detecting the load-induced heat capacity change of a water-bearing domestic appliance, in particular a dishwasher, for optimizing a drying process. The method is characterized by sensing a temperature gradient during cooling of the dishes.

FR 2 574 645 A relates to a process for determining a dishwashing load in a dishwasher is characterised in that the dishwashing load is transformed into a function of one variable which is easy to measure and is chosen from the variables consisting respectively of the time for heating with recycling of a predetermined quantity of water in the apparatus and by the temperature reached, after heating and recycling, by a predetermined quantity of water in this apparatus.

### SUMMARY OF THE INVENTION

The invention is defined by the subject-matter of independent claim 1. The dependent claims are directed to advantageous embodiments.

### ADVANTAGES OF THE INVENTION

Advantageously, a dishwasher includes: a washing tub including a reserving unit for reserving wash water and containing therein an item to be washed; a water feed unit for feeding water into the washing tub; a heating unit for heating the wash water reserved in the reserving unit; a temperature detecting unit for detecting the temperature of the wash water reserved in the reserving unit; a washing unit including at least a washing pump for pressurizing the wash water and a washing nozzle for spraying the wash water toward the item to be washed; and a control unit for controlling the water feed unit, the heating unit, and the washing unit based on the temperature detected by the temperature detecting unit, so as to carry out at least a wash water heating step and a heating/rinsing step, the control unit comparing the rate of temperature rise of the wash water in the wash water heating step that is detected by the temperature detecting unit with the rate of temperature rise of the wash water in the heating/rinsing step, so as to detect and control the volume of the item to be washed.

In this manner, it is possible to accurately determine the volume of a dish while suppressing variations of the wattage of the heating unit in each of dishwashers or the influence by power source voltage fluctuations in the installation environment.

### BRIEF DESCRIPTION OF DRAWINGS

FIG. 1 is a cross-sectional view schematically showing a dishwasher in a first exemplary embodiment according to the present invention.
FIG. 2 is a flowchart illustrating the operation of the dishwasher in the first exemplary embodiment according to the present invention.
FIG. 3 is a schematic table for use in estimating the volume of a dish in the dishwasher in the first exemplary embodiment according to the present invention.
FIG. 4 is a table illustrating relationships between the volume of a dish estimated in the dishwasher in the first exemplary embodiment according to the present invention and attainable temperature Tk in a heating/rinsing step and between the volume of a dish and time tk in a drying step.
FIG. 5 is a cross-sectional view schematically showing a dishwasher in a second exemplary embodiment according to the present invention.
FIG. 6 is a view illustrating the configuration of a system of a conventional dishwasher.
FIG. 7 is a graph illustrating a relationship between a power source voltage and a rate of temperature rise in the conventional dishwasher.

### DESCRIPTION OF EMBODIMENTS

Exemplary embodiments according to the present invention will be described below with reference to the drawings. Incidentally, the present invention is not intended to be limited to the exemplary embodiments.

### FIRST EXEMPLARY EMBODIMENT

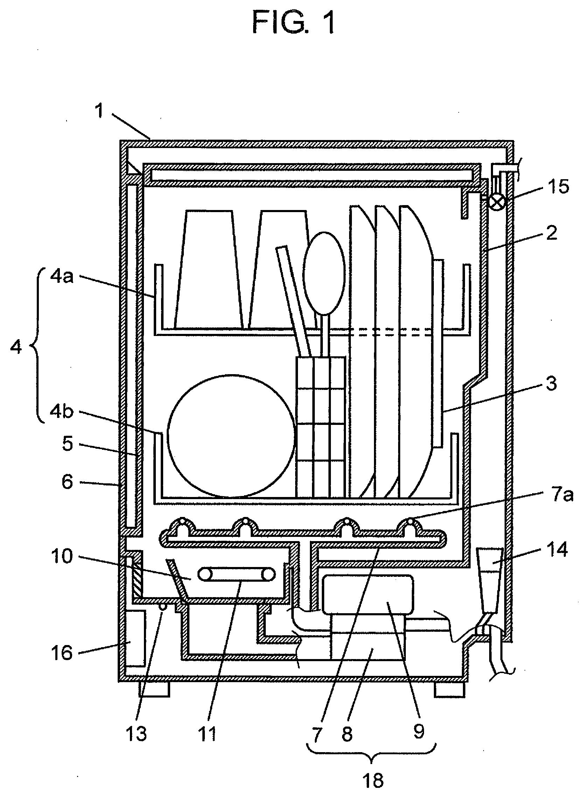

FIG. 1 is a cross-sectional view schematically showing a dishwasher in a first exemplary embodiment according to the present invention.

As shown in FIG. 1, the dishwasher in the present exemplary embodiment is provided with washing tub 2, water feed unit 15, heater 11 serving as a heating unit, thermistor 13 serving as a temperature detecting unit, washing unit 18, and control unit 16.

Washing tub 2 is housed inside of main body 1. Inside of washing tub 2 is contained dish basket 4, in which an item to be washed such as dish 3 is put. Dish basket 4 includes upper dish basket 4a and lower dish basket 4b. Moreover, opening 5 is formed at a front surface of washing tub 2, and it is configured to be opened or closed by door 6. Dish basket 4 can be slid and drawn through opening 5 opened by door 6.

Washing unit 18 includes washing nozzle 7 disposed in the bottom portion of washing tub 2 and fixed nozzles (not shown) disposed at the upper and rear surfaces of washing tub 2. At the surfaces of the washing nozzles such as washing nozzle 7 and the fixed nozzles are formed a plurality of spraying ports 7a, through which wash water is sprayed. Washing nozzle 7 is rotatably disposed in the bottom portion of washing tub 2, thereby spraying the wash water toward dish 3 and the like. Here, the wash water is referred to as liquid for use in washing or rinsing the item to be washed such as dish 3 inside of the dishwasher.

Although the present exemplary embodiment illustrates only one washing nozzle 7 disposed in the bottom portion of washing tub 2, two washing nozzles 7 may be provided according to the shape of washing tub 2 or washing nozzle 7 may be replaced with a fixed nozzle which cannot be rotated. Additionally, washing unit 18 is provided with washing pump 8 for pressurizing the wash water and feeding the wash water to washing nozzle 7 or the like and motor 9 for driving washing pump 8 on the way of a circulation path (not shown) disposed outside of the bottom of washing tub 2.

Furthermore, reserving unit 10 for reserving the wash water therein and heater (heating unit) 11 for heating the wash water are disposed in the bottom portion inside of washing tub 2 in the vicinity of opening 5. Thermistor (temperature detecting unit) 13 for detecting the temperature of the wash water is attached onto the outer wall of the bottom of washing tub 2, so as to indirectly detect the temperature of the wash water or air staying inside of washing tub 2 via the bottom wall of washing tub 2. Water level detecting switch 14 for detecting the water level of the wash water reserved in the lower portion of washing tub 2 is mounted on the outer wall of the lower portion of washing tub 2. In addition, water feed unit 15 for feeding the water into washing tub 2 is fixed onto the outer wall of the upper portion of washing tub 2.

Control unit 16 disposed between main body 1 and washing tub 2 and in the lower portion of main body 1 controls water feed unit 15, heater 11, and washing pump 8 so as to successively perform a series of steps of washing, rinsing, heating/rinsing, and drying dish 3. Moreover, control unit 16 processes signals detected by water level detecting switch 14 and thermistor 13, and further, determines the volume of a dish inside of washing tub 2 based on the temperature of the wash water detected by thermistor 13.

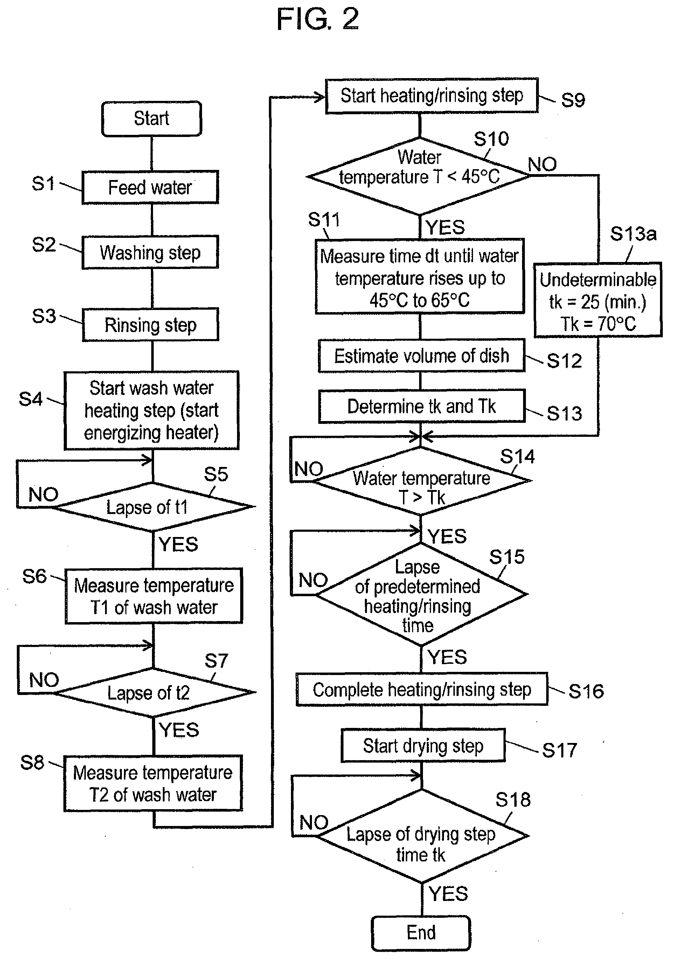

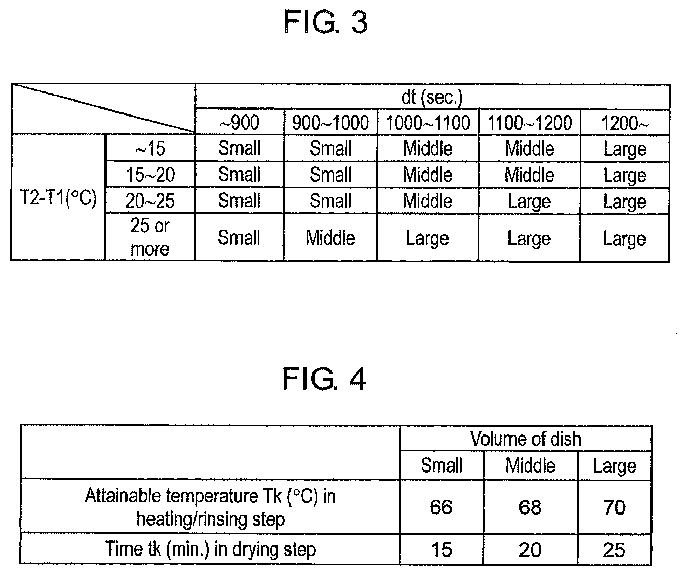

Operations and functions of the dishwasher in the present exemplary embodiment such configured as described above will be described with reference to FIGS. 2 to 4 in addition to FIG. 1. FIG. 2 is a flowchart illustrating the operation of the dishwasher in the first exemplary embodiment according to the present invention; FIG. 3 is a schematic table for use in estimating the volume of a dish in the dishwasher in the first exemplary embodiment according to the present invention; and FIG. 4 is a table illustrating relationships between the volume of a dish estimated in the dishwasher in the first exemplary embodiment according to the present invention and attainable temperature Tk in a heating/rinsing step and between the volume of a dish and time tk in a drying step.

First of all, as illustrated in FIG. 2, the item to be washed such as dish 3 is put in dish basket 4, and then, is contained inside of washing tub 2. A user puts a detergent and closes opening 5 of washing tub 2 by door 6, and thus, starts operation.

Next, control unit 16 actuates water feed unit 15 to feed the water to washing tub 2 until water level detecting switch 14 detects the water level, and then, feeds running water or the like to reserving unit 10 (step S1). Thereafter, a washing step is carried out (step S2). At this time, washing pump 8 is actuated to press-feed the wash water to washing nozzle 7 and the like, thereby spraying the wash water toward dish 3. Subsequently, the wash water is once drained, and then, the water is fed again through water feed unit 15, followed by a rinsing step (step S3). Through the washing step (step S2) and the rinsing step (step S3), stain adhering to the dish can be almost washed out. Additionally, a heating/rinsing step (step S9), described later, is further carried out in the present exemplary embodiment, and therefore, stubborn stain such as oily stain can be securely washed out, thus providing the dishwasher excellent in washing performance.

Upon completion of the rinsing step, the wash water is once drained, and then, the water is fed again into washing tub 2 through water feed unit 15. Thereafter, control unit 16 energizes heater 11, starts heating the wash water, carries out a wash water heating step, and thus, heats the wash water (step S4). At this time, the wash water is heated without spraying the wash water through the washing nozzle such as washing nozzle 7, so that the heat of heater 11 is utilized for increasing the temperature of the wash water but is hardly utilized for increasing the temperature of dish 3. Although washing pump 8 is controlled so as not to spray the wash water in the wash water heating step in the present exemplary embodiment, washing pump 8 may be controlled to such an extent that the temperature of dish 3 is not increased, thereby spraying and circulating the wash water.

Next, a method for estimating the thermal capacity of heater 11, which is performed after the start of the wash water heating step, will be described below with reference to step S5 to step S8 in FIG. 2.

First of all, when time t1 elapses after the start of the energization to heater 11 (step S5), thermistor 13 detects temperature T1 of the wash water (step S6). Here, time t1 is set until the temperature of the wash water is measured after the water is fed up to a predetermined water amount by water level detecting switch 14 in order to wait until the temperature of the wash water becomes substantially the same as that of the lower portion (the portion at which thermistor 13 is attached) of washing tub 2. Thereafter, the wash water heating step is continued. When time t2 elapses after the start of the energization to heater 11 (step S7), temperature T2 of the wash water is detected again (step S8). At this time, the heat amount generated by heater 11 during this duration (t2 - t1) is used for heating an object having a known thermal capacity such as the wash water and a part of washing tub 2, but cannot be influenced by the volume of dish 3 housed inside washing tub 2.

As a consequence, measuring rising-up temperature (T2 - T1) enables estimating the thermal capacity of heater 11 provided in each of dishwashers with respect to the wash water in the power source voltage environment where the dishwasher is installed, corresponding to the state in which no dish 3 is contained inside of washing tub 2.

Here, rising-up temperature (T2 - T1) measured in step S5 to step S8 may be defined as the rate of temperature rise of the wash water in the wash water heating step during predetermined period of time (t2 - t1).

Thereafter, a heating/rinsing step is carried out (step S9) for rinsing dish 3 with heated wash water. Next, it is determined whether or not temperature T of the wash water is lower than a predetermined temperature, for example, 45°C (step S10). At this time, if temperature T of the wash water is lower than 45°C (Yes in step S10), heating by heater 11 is continued, and then, time dt until temperature T of the wash water reaches a predetermined temperature of 65°C from 45°C is measured (step S11).

Here, the wash water is heated while being sprayed toward dish 3 in the heating/rinsing step, and therefore, a rate of temperature rise is influenced by the volume of dish 3, unlike in the above-described wash water heating step. Hence, in consideration of both of time dt measured in step S11 and the thermal capacity of heater 11 estimated in the wash water heating step, the rate of temperature rise of the wash water in the wash water heating step is compared with the rate of temperature rise of the wash water in the heating/rinsing step. In this manner, the heat amount required for increasing the temperature of dish 3, that is, the volume of dish 3, can be estimated (step S12).

A specific example will be described below with reference to FIG. 3.

FIG. 3 illustrates the volume of dish 3 estimated from rising-up temperature (T2 - T1) and predetermined time dt. Here, the volume is large when the ratio of the volume of dish 3 actually contained to the volume of washing tub 2 is larger than 2/3; it is middle when the ratio is smaller than 2/3 and larger than 1/3; and it is small when the ratio is smaller than 1/3.

As illustrated in FIG. 3, as the rate of temperature rise of the wash water in the wash water heating step is higher, the thermal capacity of heater 11 becomes higher. As a consequence, even if time is short until the temperature of the wash water becomes 65°C in the heating/rinsing step, it is determined that the volume of the item to be washed such as dish 3 is large.

Subsequently, heating/rinsing attainable temperature Tk as a highest temperature to be attained until the completion of heating and rinsing and drying step time tk in the drying step are determined based on values illustrated in FIG. 4 according to the volume of dish 3 estimated in step S12 (step S13). FIG. 4 exemplifies the relationship between the volume of dish 3 estimated in step S12 and heating/rinsing attainable temperature Tk and between the volume and drying step time tk. As illustrated in FIG. 4, when the result of the volume of dish 3 is determined as being, for example, "large" in step S12, heating/rinsing attainable temperature Tk is assumed to be 70°C whereas time tk in the drying step is assumed to be 25 minutes. In the same manner, when the result of the volume of dish 3 is determined as being, for example, "middle" in step S12, heating/rinsing attainable temperature Tk is assumed to be 68°C whereas time tk in the drying step is assumed to be 20 minutes. Similarly, when the result of the volume of dish 3 is determined as being, for example, "small" in step S12, heating/rinsing attainable temperature Tk is assumed to be 66°C whereas time tk in the drying step is assumed to be 15 minutes.

Here in step S10, the determination is impossible in the case where temperature T of the wash water at the beginning of the heating/rinsing step is a predetermined temperature of 45°C or higher, like when the dishwasher is connected to a water heating facility or the like (NO in step S10). Therefore, heating/rinsing attainable temperature Tk and drying step time tk are set in the same control condition when the volume of the dish is determined as "large" (see FIG. 3) (step S13a). This is directed to keeping the washing or drying performance sufficient whatever the volume of dish 3 is when the determination is impossible. In this manner, even if the dishwasher is used in connection to a water heating facility, heating/rinsing or drying can be satisfactorily carried out.

Although the measurement duration or threshold of the temperature of the wash water for measuring time dt has been embodied in the above-described exemplary embodiment, this does not limit a calculating unit for calculating heating/rinsing attainable temperature Tk or drying step time tk, in particular.

In addition, the heating/rinsing step and the drying step are carried out under the control condition according to the estimated volume of dish 3, that is, at heating/rinsing attainable temperature Tk and during drying step time tk in the above-described exemplary embodiment. However, they are not limited to this. For example, when at least either one of the heating/rinsing step and the drying step is carried out under the above-described control condition, the heating/rinsing or the drying can be satisfactorily carried out according to the volume of dish 3, thereby saving the energy or shortening the time without degrading the performances.

Next, it is determined whether or not the temperature of the wash water reaches up the determined heating/rinsing attainable temperature Tk (step S14). If the temperature of the wash water reaches up the heating/rinsing attainable temperature Tk (YES in step S14), it is determined whether or not a predetermined heating/rinsing time elapses (step S15). If the predetermined heating/rinsing time elapses (YES in step S15), the heating/rinsing step is stopped (step S16). Subsequently, the drying step is started in step S17, and therefore, dish 3 is started to be dried. Thereafter, it is determined whether or not the drying step time tk determined according to the volume of dish 3 elapses (step S18). If the drying step time tk elapses (YES in step S18), the drying step and the operation of the dishwasher come to an end.

As described above, the dishwasher according to the present invention can suppress the variations of the wattage of the heating unit and the influence by the power source voltage fluctuations so as to securely determine the volume of the dish and the like. As a consequence, the heating/rinsing attainable temperature or the drying step time optimum for the volume of the dish can be determined, and thus, the heating/rinsing step or the drying step can be performed based on the optimum temperature or time. Consequently, it is possible to achieve the dishwasher capable of saving the energy or time.

Moreover, only the existing thermistor for detecting the temperature of the wash water can determine the volume of the dish or the like. Consequently, it is unnecessary to additionally provide a power source voltage detecting circuit for detecting fluctuations of a power source voltage so as to control a control unit such as a heater, thereby making it possible to achieve the dishwasher having the simple configuration having a small size.

Incidentally, in the present exemplary embodiment, the wash water heating step (step S4 to step S8) may be carried out before the washing step (step S2), and further, the volume of dish 3 may be estimated so as to determine the values tk and Tk (step S9 to step S13) during the washing step. However, in this case, the wash water contains the detergent. Therefore, the method according to the present invention can estimate the volume of the dish with higher accuracy.

### SECOND EXEMPLARY EMBODIMENT

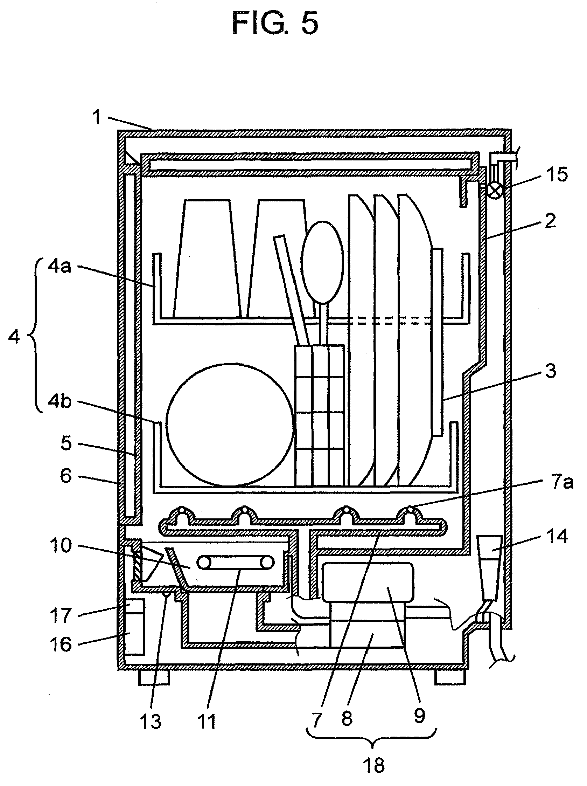

Next, a second exemplary embodiment according to the present invention will be described with reference to FIGS. 2 and 5. FIG. 5 is a cross-sectional view schematically showing a dishwasher in the second exemplary embodiment according to the present invention. As shown in FIG. 5, storage unit 17 is disposed between main body 1 and washing tub 2 and in the lower portion of main body 1. That is, the present exemplary embodiment is different from the first exemplary embodiment in including storage unit 17 in addition to the configuration in the first exemplary embodiment according to the present invention. The description of the configuration, operation, and function common to the first exemplary embodiment will be omitted below, but different operation and function will be described with reference to FIG. 2.

Storage unit 17 shown in FIG. 5 first stores therein the resultant value of a rate of temperature rise of wash water measured in heated wash water heating step (step S4 to step S8) during a first operation of the dishwasher. The stored rate of temperature rise is compared with a rate of temperature rise of wash water in heating/rinsing step (step S9 to step S11) during a next operation of the dishwasher. In this manner, the volume of the dish or the like is estimated, and then, heating/rinsing attainable temperature (Tk) and drying time (tk) are determined (step 13). Based on the resultant values, a heating/rinsing step (step 15) and a drying step (step 17) are carried out.

Specifically, the rate of temperature rise of the wash water in the wash water heating step that is determined in step S4 to step S8 described in the first exemplary embodiment with reference to FIG. 2 is stored in storage unit 17 during a first operation of the dishwasher. Thereafter, operations in the dishwasher are performed according to the same flow as that in the first exemplary embodiment, and then, the first operation is finished. Here, the rate of temperature rise of the wash water to be stored in storage unit 17 is stored as a value indicating heating ability inherent to the dishwasher in power source voltage environment, in which a heating unit inherent to the dishwasher and the dishwasher are installed.

In second or more operations of the dishwasher, a heating/rinsing step is carried out after water feeding (step S1), a washing step (step S2), and a rinsing step (step S3), and then, the rate of temperature rise of the wash water is determined (step S9 to step S11). Next, the rate of temperature rise of the wash water in the second or more operations are compared with the rate of temperature rise of the wash water stored in storage unit 17 during the first operation of the dishwasher. In this manner, the volume of dish 3 shown in, for example, FIG. 3 is detected (step S12). In other words, except the first operation of the dishwasher, a wash water heating step (step S4 to step S8) is not carried out, but a heating/rinsing step is started. And then, the volume of dish 3 is estimated with reference to FIGS. 3 and 4, thereby determining values tk and Tk (step S9 to step S13). Thereafter, dish 3 is rinsed at a predetermined temperature for a predetermined period of time. Upon completion of the heating/rinsing step (step S16), the operation comes to an end through a drying step (step S17).

As described above, the rate of temperature rise of the wash water in the wash water heating step during the first operation is stored in storage unit 17 as a value indicating heating ability inherent to the dishwasher in the power source voltage environment in which the dishwasher is installed in the present exemplary embodiment. During the next operation of the dishwasher, the wash water heating step is not carried out. The value stored in storage unit 17 is compared with the rate of temperature rise of the wash water measured in the heating/rinsing step during the next operation, thereby detecting the volume of dish 3. As a consequence, a wash water heating step (step S4 to step S8) for heating the wash water and preventing the wash water from being spraying through washing nozzles can be omitted, thus further saving energy or time.

### INDUSTRIAL APPLICABILITY

The dishwasher according to the present invention can determine the volume of the dish while suppressing the variations of the wattage of the heating unit in each of the dishwashers or the influence by the power source voltage fluctuations in the installation environment, thus saving energy or time. Consequently, the present invention is usable in the technical fields of not only a tabletop dishwasher but also a built-in dishwasher or a business-grade dishwasher.

### REFERENCE MARKS IN THE DRAWINGS

- 1: main body
- 2: washing tub
- 3: dish (item to be washed)
- 4: dish basket
- 4a: upper dish basket
- 4b: lower dish basket
- 5: opening
- 6: door
- 7: washing nozzle
- 8: washing pump
- 9: motor
- 10: reserving unit
- 11: heater (heating unit)
- 13: thermistor (temperature detecting unit)
- 14: water level detecting switch
- 15: water feed unit
- 16: control unit
- 17: storage unit
- 18: washing unit

## Claims

1. A dishwasher comprising:
a washing tub (2) including a reserving unit (10) configured to reserve wash water and containing therein an item (3) to be washed;
a water feed unit (15) configured to feed water into the washing tub (2);
a heating unit (11) configured to heat the wash water reserved in the reserving unit (10);
a temperature detecting unit (13) configured to detect a temperature of the wash water reserved in the reserving unit (10);
a washing unit (18) including at least a washing pump (8) for pressurizing the wash water and a washing nozzle (7) for spraying the wash water toward the item (3) to be washed;
a water level detecting switch (14) configured to detect a level of the wash water; and
a control unit (16) configured to:
control the water feed unit (15), the heating unit (11), and the washing unit (18) so as to carry out at least a wash water heating step being a step of heating the wash water without spraying the wash water through the washing nozzle (7), and a heating/rinsing step being a step of rinsing the item (3) to be washed with heated wash water, which is carried out after the step of heating the wash water, wherein in the heating/rinsing step the wash water is heated while being sprayed toward the item (3) to be washed, wherein the control unit (16) is configured to control the heating unit (11) and the washing unit (18) based on the temperature detected by the temperature detecting unit (13), and
to actuate the water feed unit (15) to feed water to the washing tub (2) until a water level is detected by the water level detecting switch (14);
**characterized in that**
the control unit (16) is further configured to:
estimate a thermal capacity of the heating unit (11) in the wash water heating step, measure a time dt in the heating/rinsing step, wherein the time dt is a time duration from the time when the wash water has a first predetermined temperature until the wash water reaches a second predetermined temperature,
estimate a volume of the item (3) to be washed in consideration of the thermal capacity of heater (11) and the time dt by comparing the rate of temperature rise of the wash water in the wash water heating step with the rate of temperature rise of the wash water in the heating/rising step, and
control the heating unit (11) and the washing unit (18) based on the estimated volume of the item (3) to be washed.

2. The dishwasher according to claim 1, wherein the control unit (16) is further configured to change a control condition of at least either one of the heating/rinsing step and a drying step according to the volume of the item (3) to be washed so as to control the heating unit (11) and the washing unit (18).

3. The dishwasher according to claim 2, wherein the control unit (16) is further configured to control the heating unit (11) and the washing unit (18) so as for the heating/rinsing step and a drying step to be carried out under the same control condition as that in the case that the volume of the item (3) to be washed is determined as large when the wash water has a predetermined temperature being the first predetermined temperature or higher at beginning of the heating/rinsing step.

4. The dishwasher according to any one of claims 1 to 3, further comprising a storage unit (17) configured to store the rate of temperature rise of the wash water,
wherein the control unit (16) is further configured to allow the storage unit (17) to store the rate of temperature rise of the wash water in the wash water heating step during a first operation, and compare the rate of temperature rise of the wash water stored in the storage unit (17) with the rate of temperature rise of the wash water in the heating/rinsing step without carrying out the wash water heating step for second and onward operations, so as to detect the volume of the item (3) to be washed and control the heating unit (11) and the washing unit (18).

5. The dishwasher according to any one of claims 1 to 4, wherein the temperature detecting unit (13) is configured to detect a first temperature T1 of the wash water when a first time t1 elapses after the start of energization to the heating unit (11), said time t1 being set until the temperature of the wash water is measured after the water is fed up to a predetermined water amount by the water level detecting switch (14), and detect a second temperature T2 of the wash water when a second time t2 elapses after the start of the energization to the heating unit (11), a rising up temperature between the first temperature T1 and the second temperature T2 being defined as the rate of temperature rise of the wash water in the wash water heating step during a predetermined period of time which is determined by the first time t1 and the second time t2.

6. The dishwasher according to claim 5, wherein in the heating/rinsing step it is determined whether the wash water is lower than the first predetermined temperature and if the temperature of the wash water is lower than the first predetermined temperature, the heating by the heating unit (11) is continued and the time dt until the temperature of the wash water reaches the second predetermined temperature from the first predetermined temperature is measured.

## Patentansprüche

1. Geschirrspüler mit:
einer Waschwanne (2) einschließlich einer Vorratseinheit (10), die konfiguriert ist, um Waschwasser zu bevorraten und die darin einen zu waschenden Gegenstand (3) enthält;
einer Wasserzuführungseinheit (15), die konfiguriert ist, um der Waschwanne (2) Wasser zuzuführen;
einer Heiz- bzw. Erwärmungseinheit (11), die konfiguriert ist, um das in der Vorratseinheit (10) vorrätige Waschwasser zu erwärmen;
einer Temperaturerfassungseinheit (13), die konfiguriert ist, um eine Temperatur des in der Vorratseinheit (10) vorrätigen Waschwassers zu erfassen;
einer Wascheinheit (18) mit wenigstens einer Waschpumpe (8), um das Waschwasser unter Druck zu setzen, und einer Waschdüse (7), um das Waschwasser auf den zu waschenden Gegenstand (3) zu sprühen;
einem Wasserpegel-Erfassungsschalter (14), der konfiguriert ist, um einen Pegel des Waschwassers zu erfassen; und
einer Steuereinheit (16), die konfiguriert ist, um:
die Wasserzuführungseinheit (15), die Erwärmungseinheit (11) und die Wascheinheit (18) so zu steuern, dass wenigstens der Waschwasser-Erwärmungsschritt ausgeführt wird, der ein Schritt zum Erwärmen des Waschwassers ohne Sprühen des Waschwassers durch die Waschdüse (7) ist, wobei ein Erwärmungs-/Spülschritt ein Schritt zum Spülen des zu waschenden Gegenstands (3) mit erwärmten Waschwasser ist, der nach dem Schritt zum Erwärmen des Waschwasser ausgeführt wird, wobei im Erwärmungs-/Spülschritt das Waschwasser erwärmt wird, während es auf den zu waschenden Gegenstand (3) gesprüht wird, wobei die Steuereinheit (16) konfiguriert ist, um die Erwärmungseinheit (11) und die Wascheinheit (18) auf der Basis der von der Temperaturerfassungseinheit (13) erfassten Temperatur zu steuern und die Wasserzuführungseinheit (15) zu betätigen, um der Waschwanne (2) Wasser zuzuführen, bis ein Wasserpegel durch den Wasserpegel-Erfassungsschalter (14) erfasst wird;
**dadurch gekennzeichnet, dass**
die Steuereinheit (16) des Weiteren konfiguriert ist, um:
eine Wärmekapazität der Erwärmungseinheit (11) im Waschwasser-Erwärmungsschritt zu schätzen, eine Zeit dt im Erwärmungs-/Spülschritt zu messen, wobei die Zeit dt eine Zeitdauer von dem Zeitpunkt ist, an dem das Waschwasser eine erste vorgegebene Temperatur aufweist, bis das Waschwasser eine zweite vorgegebene Temperatur erreicht,
ein Volumen des zu waschenden Gegenstands (3) unter Berücksichtigung der Wärmekapazität des Heizgerätes (11) und der Zeit dt zu schätzen, indem die Geschwindigkeit des Temperaturanstiegs des Waschwassers im Waschwasser-Erwärmungsschritt mit der Geschwindigkeit des Temperaturanstiegs des Waschwassers im Erwärmungs-/Spülschritt verglichen wird, und
die Erwärmungseinheit (11) und die Wascheinheit (18) auf der Basis des geschätzten Volumens des zu waschenden Gegenstands (3) zu steuern.

2. Geschirrspüler nach Anspruch 1, wobei die Steuereinheit (16) des Weiteren konfiguriert ist, um eine Steuerbedingung von wenigstens entweder dem Erwärmungs-/Spülschritt oder einem Trocknungsschritt gemäß dem Volumen des zu waschenden Gegenstands (3) zu ändern, um so die Erwärmungseinheit (11) und die Wascheinheit (18) zu steuern.

3. Geschirrspüler nach Anspruch 2, wobei die Steuereinheit (16) des Weiteren konfiguriert ist, um die Erwärmungseinheit (11) und die Wascheinheit (18) so zu steuern, dass der Erwärmungs-/Spülschritt und der Trocknungsschritt unter den gleichen Steuerbedingungen ausgeführt werden, wie in dem Fall, dass das Volumen des zu waschenden Gegenstands (3) als groß bestimmt wird, wenn das Waschwasser eine vorgegebene Temperatur aufweist, die die erste vorgegebene Temperatur oder höher zu Beginn des Erwärmungs-/Spülschrittes ist.

4. Geschirrspüler nach einem der Ansprüche 1 bis 3, des Weiteren mit einer Speichereinheit (17), die konfiguriert ist, um die Geschwindigkeit des Temperaturanstiegs des Waschwassers zu speichern,
wobei die Steuereinheit (16) des Weiteren konfiguriert ist, um es der Speichereinheit (17) zu ermöglichen, die Geschwindigkeit des Temperaturanstiegs des Waschwassers im Waschwasser-Erwärmungsschritt während einer ersten Bedienung zu speichern und die in der Speichereinheit (17) gespeicherte Geschwindigkeit des Temperaturanstiegs des Waschwassers mit der Geschwindigkeit des Temperaturanstiegs des Waschwassers im Erwärmungs-/Spülschritt zu vergleichen, ohne den Waschwasser-Erwärmungsschritt für eine zweite und weitere Bedienungen auszuführen, um so das Volumen des zu waschenden Gegenstands (3) zu erfassen und die Erwärmungseinheit (11) und die Wascheinheit (18) zu steuern.

5. Geschirrspüler nach einem der Ansprüche 1 bis 4, wobei Temperaturerfassungseinheit (13) konfiguriert ist, um eine erste Temperatur T1 des Waschwassers zu erfassen, wenn eine erste Zeit t1 nach dem Beginn der Stromeinspeisung zur Erwärmungseinheit (11) abläuft, wobei die Zeit t1 eingestellt wird, bis die Temperatur des Waschwassers gemessen wird, nachdem das Wasser bis zu einer vorgegebenen Wassermenge durch den Wasserpegel-Erfassungsschalter (14) aufgefüllt ist, und eine zweite Temperatur T2 des Waschwassers zu erfassen, wenn eine zweite Zeit t2 nach dem Beginn der Stromeinspeisung zur Erwärmungseinheit (11) abläuft, wobei ein Ansteigen der Temperatur zwischen der ersten Temperatur T1 und der zweiten Temperatur T2 als die Geschwindigkeit des Temperaturanstiegs des Waschwassers im Waschwasser-Erwärmungsschritt während einer vorgegebenen Zeitdauer definiert wird, die durch die erste Zeit t1 und die zweite Zeit t2 bestimmt wird.

6. Geschirrspüler nach Anspruch 5, wobei im Erwärmungs-/Spülschritt bestimmt wird, ob das Waschwasser niedriger ist als die erste vorgegebene Temperatur, und wenn die Temperatur des Waschwassers niedriger ist als die erste vorgegebene Temperatur, die Erwärmung durch die Erwärmungseinheit (11) fortgesetzt wird und die Zeit dt gemessen wird, bis die Temperatur des Waschwassers die zweite vorgegebene Temperatur von der ersten vorgegebenen Temperatur erreicht.

## Revendications

1. Lave-vaisselle comportant :
une cuve de lavage (2) comprenant une unité réservoir (10) conçue pour retenir de l'eau de lavage et contenant un objet (3) à laver ;
une unité d'alimentation en eau (15) conçue pour alimenter la cuve de lavage (2) en eau ;
une unité de chauffage (11) conçue pour chauffer l'eau de lavage retenue dans l'unité réservoir (10) ;
une unité de détection de température (13) conçue pour détecter une température de l'eau de lavage retenue dans l'unité réservoir (10) ;
une unité de lavage (18) comprenant au moins une pompe de lavage (8) pour pressuriser l'eau de lavage et une buse de lavage (7) pour pulvériser l'eau de lavage en direction de l'objet (3) à laver ;
un commutateur de détection de niveau d'eau (14) conçu pour détecter un niveau de l'eau de lavage ; et
une unité de commande (16) conçue pour :
commander l'unité d'alimentation en eau (15), l'unité de chauffage (11) et l'unité de lavage (18) de manière à exécuter au moins une étape de chauffage d'eau de lavage qui consiste à chauffer l'eau de lavage sans pulvériser l'eau de lavage à travers la buse de lavage (7), et une étape de chauffage/rinçage qui consiste à rincer l'objet (3) à laver avec l'eau de lavage chauffée et qui est exécutée après l'étape de chauffage de l'eau de lavage, où lors de l'étape de chauffage/rinçage, l'eau de lavage est chauffée tout en étant pulvérisée en direction de l'objet (3) à laver, où l'unité de commande (16) est conçue pour commander l'unité de chauffage (11) et l'unité de lavage (18) en se fondant sur la température détectée par l'unité de détection de température (13) et pour actionner l'unité d'alimentation en eau (15) pour alimenter la cuve à eau (2) en eau jusqu'à ce qu'un niveau d'eau soit détecté par le commutateur de détection de niveau d'eau (14) ;
**caractérisé en ce que**
l'unité de commande (16) est conçue pour :
estimer une capacité thermique de l'unité de chauffage (11) lors de l'étape de chauffage d'eau de lavage, mesurer un temps dt lors de l'étape de chauffage/rinçage, où le temps dt est un temps qui s'écoule entre un moment où l'eau de lavage a une première température prédéterminée et un moment où l'eau de lavage atteint une seconde température prédéterminée,
estimer un volume de l'objet (3) à laver en prenant en compte la capacité thermique du chauffage (11) et le temps dt en comparant le taux de montée en température de l'eau de lavage lors de l'étape de chauffage d'eau de lavage avec le taux de montée en température de l'eau de lavage lors de l'étape de chauffage/rinçage, et
commander l'unité de chauffage (11) et l'unité de lavage (18) en se fondant sur le volume estimé de l'objet (3) à laver.

2. Lave-vaisselle selon la revendication 1, où l'unité de commande (16) est en outre conçue pour modifier une condition de commande d'au moins une des étapes que sont l'étape de chauffage/rinçage et une étape de séchage, en fonction du volume de l'objet (3) à chauffer, pour commander l'unité de chauffage (11) et l'unité de lavage (18).

3. Lave-vaisselle selon la revendication 2, où l'unité de commande (16) est en outre conçue pour commander l'unité de chauffage (11) et l'unité de lavage (18) de manière à exécuter l'étape de chauffage/rinçage et une étape de séchage avec la même condition de commande que lorsque le volume déterminé de l'objet (3) à laver est grand, quand l'eau de lavage a une température prédéterminée correspondant à la première température prédéterminée ou plus, au début de l'étape de chauffage/rinçage.

4. Lave-vaisselle selon l'une quelconque des revendications 1 à 3, comportant en outre une unité de stockage (17) conçue pour stocker le taux d'augmentation de la température de l'eau de lavage,
où l'unité de commande (16) est en outre conçue pour permettre à l'unité de stockage (17) de stocker le taux d'augmentation de la température de lavage lors de l'étape de chauffage d'eau de lavage au cours d'une première opération, et pour comparer le taux d'augmentation de la température de lavage stocké dans l'unité de stockage (17) avec le taux d'augmentation de la température de lavage lors de l'étape de chauffage/rinçage sans exécuter l'étape de chauffage d'eau de lavage lors d'une seconde opération et d'opérations suivantes, afin de détecter le volume de l'objet (3) à chauffer et de commander l'unité de chauffage (11) et l'unité de lavage (18).

5. Lave-vaisselle selon l'une quelconque des revendications 1 à 4, où l'unité de détection de température (13) est conçue pour détecter une première température T1 de l'eau de lavage lorsqu'un premier temps t1 après le début de la mise en marche de l'unité de chauffage (11) est écoulé, ledit temps t1 étant le temps qui s'écoule jusqu'au moment où la température de l'eau de lavage est mesurée quand l'eau amenée a atteint une quantité d'eau prédéterminée détectée par le commutateur de détection de niveau d'eau (14), et pour détecter une seconde température T2 de l'eau de lavage lorsqu'un second temps t2 après le début de la mise en marche de l'unité de chauffage (11) est écoulé, une augmentation de la température entre la première température T1 et la seconde température T2 étant définie comme taux d'augmentation de la température de l'eau de lavage lors de l'étape de chauffage d'eau de lavage pendant une période de temps prédéterminée définie par le premier temps t1 et le second temps t2.

6. Lave-vaisselle selon la revendication 5, où on détermine, lors de l'étape de chauffage/rinçage si la température de l'eau de lavage est inférieure à une première température prédéterminée et si la température de l'eau de lavage est inférieure à la première température prédéterminée, le chauffage par l'unité de chauffage (11) est poursuivi et le temps dt qui s'écoule entre le moment où l'eau de lavage est à la première température prédéterminée et le moment où l'eau de lavage a atteint la seconde température prédéterminé est mesuré.
